# EUROPÄISCHE PATENTANMELDUNG

(11) **EP 4 238 662 A1**
(43) Veröffentlichungstag der Anmeldung: **06.09.2023**
(21) Anmeldenummer: 23157675.2
(22) Anmeldetag: 21.02.2023
(51) Int. Cl.: B06B 3/00, B23K 20/10, B26D 7/08, B29C 65/08, B29C 65/74, B29C 65/00

(54) **ULTRASCHALLWERKZEUG**

(30) Priorität: 04.03.2022 DE 202022101205 U
(71) Anmelder: MS Ultraschall Technologie GmbH, 78549 Spaichingen (DE)
(72) Erfinder: Krell, Volker, 78579 Neuhause (DE)
(74) Vertreter: Manitz Finsterwald Patent- und Rechtsanwaltspartnerschaft mbB

(57) **Zusammenfassung**

Ein Ultraschallwerkzeug umfasst eine Sonotrode aus elektrisch leitendem Material und einen mit diesem verbundenen Konverter, in dem eine Piezoeinheit vorgesehen ist, die über elektrische Kontakte ansteuerbar ist. Zwischen der Sonotrode und den elektrischen Kontakten der Piezoeinheit ist eine elektrische Isolierung vorgesehen.

## Beschreibung

Die vorliegende Erfindung betrifft ein Ultraschallwerkzeug, umfassend eine Sonotrode aus elektrisch leitendem Material und einen mit dieser verbundenen Konverter, in dem eine über elektrische Kontakte ansteuerbare Piezoeinheit vorgesehen ist.

Derartige Ultraschallwerkzeuge dienen zum Verschweißen, Versiegeln, Trennen oder auch Trennschweißen von thermoplastischen Werkstoffen, beispielsweise zum Versiegeln von Materialbahnen. Bei bestimmten Anwendungen kann es erforderlich sein, einen Kontakt zwischen der Sonotrode und einem Amboss, beispielsweise einer rotierenden Walze, zu detektieren. Hierbei können auch mehrere Ultraschallwerkzeuge auf ein und demselben Amboss auftreffen. Um einen mechanischen Kontakt zwischen jeder einzelnen Sonotrode und dem Amboss elektrisch erkennen zu können, muss jedes Ultraschallwerkzeug von dem Amboss elektrisch isoliert sein. Allerdings sind normalerweise derartige Ultraschallwerkzeuge aus Sicherheitsgründen geerdet, was eine elektrische Kontakterkennung verhindert. Ohne eine Erdung des Konvertergehäuses bzw. des Ultraschallwerkzeugs bestünde jedoch die Gefahr eines elektrischen Schlags für Personen, die das Konvertergehäuse oder damit verbundene metallische Komponenten des Ultraschallwerkzeugs berühren.

Es ist deshalb die Aufgabe der vorliegenden Erfindung, ein Ultraschallwerkzeug der eingangs genannten Art zu schaffen, mit dem eine elektrische Kontakterkennung zwischen Ultraschallwerkzeug und einem metallischen Amboss möglich ist. Die Lösung dieser Aufgabe erfolgt durch die Merkmale des Anspruchs 1 und insbesondere dadurch, dass zwischen der Sonotrode und den elektrischen Kontakten der Piezoeinheit eine elektrische Isolierung vorgesehen ist. Auf diese Weise wird erreicht, dass entweder auf eine Erdung des Konvertergehäuses verzichtet werden kann oder aber, dass bei geerdetem Konvertergehäuse mit der Sonotrode ein elektrischer Signalanschluss verbunden werden kann, um eine elektrisch leitende Verbindung zwischen der Sonotrode und dem Amboss zu detektieren.

Vorteilhafte Ausführungsformen der Erfindung sind in der Beschreibung, der Zeichnung sowie den Unteransprüchen beschrieben.

Nach einer ersten vorteilhaften Ausführungsform kann die Isolierung an einer Grenzfläche zwischen der Sonotrode und dem Konverter vorgesehen sein. Alternativ kann die Isolierung an einer Grenzfläche zwischen der Sonotrode und einem Amplitudenverstärker vorgesehen sein, der zwischen der Sonotrode und dem Konverter befestigt ist. Schließlich kann es auch vorteilhaft sein, wenn die Isolierung an einer Grenzfläche zwischen dem Konverter und einem Amplitudenverstärker vorgesehen ist, der zwischen der Sonotrode und dem Konverter befestigt ist. In allen Fällen ist die elektrisch leitende Sonotrode galvanisch von weiteren Komponenten des Ultraschallwerkzeugs getrennt, um die gewünschte elektrische Detektion einer mechanischen Berührung zwischen Sonotrode und Amboss durchführen zu können.

Nach einer weiteren vorteilhaften Ausführungsform kann die Isolierung ein elektrisch isolierendes Verbindungselement umfassen, beispielsweise einen Zapfen, einen Stift, eine Schraube oder dergleichen. Die elektrische Isolierung kann besonders wirksam dadurch erreicht werden, dass das Verbindungselement vollständig aus elektrisch isolierendem Material besteht, beispielsweise aus Kunststoff, Keramik oder Glas. Alternativ kann das Verbindungselement zumindest teilweise mit einer elektrisch isolierenden Beschichtung versehen sein, beispielsweise aus Keramik, Teflon oder dergleichen.

Nach einer weiteren vorteilhaften Ausführungsform kann das Verbindungselement eine Schraubverbindung umfassen, sodass zwei Komponenten des Ultraschallwerkzeugs auf an sich bekannte Weise miteinander verschraubt werden können. Auch kann es vorteilhaft sein, wenn die Isolierung Teil einer kraftschlüssigen Verbindung ist, die beispielsweise ein Klemmelement umfasst, beispielsweise eine Spannzange oder ein Spannfutter.

Nach einer weiteren vorteilhaften Ausführungsform kann die Isolierung stoffschlüssig mit einem Teil des Ultraschallwerkzeugs verbunden sein, beispielsweise durch Vergießen oder Verkleben.

Nach einer weiteren vorteilhaften Ausführungsform kann eine Schraubverbindung eines elektrisch isolierenden Verbindungselementes ein Gewinde aufweisen, bei dem nur eine von zwei an ein Gewindetal angrenzenden Gewindeflanken insbesondere mit Keramik beschichtet ist. Wenn beispielsweise lediglich diejenigen Gewindeflanken beschichtet werden, die bei einer Verbindung der Komponenten des Ultraschallwerkzeugs auf Druck beansprucht werden, ist eine deutlich erhöhte Standzeit möglich, da keine auf Zug belasteten Beschichtungen vorhanden sind, die sich schneller von dem Grundkörper lösen könnten.

Nach einer weiteren vorteilhaften Ausführungsform kann die Schraubverbindung ein Gewinde aufweisen, dessen Gewindegang unterbrochen ist. So kann beispielsweise jeder zweite Gewindegang der Schraubverbindung weggelassen werden, sodass einerseits ein größerer Raum für das Aufbringen einer Beschichtung zur Verfügung steht und andererseits kein spitzwinkliger Gewindegrunde vorhanden ist, in denen eine Beschichtung nur schlecht auf einem Grundkörper hält. Nach einer weiteren vorteilhaften Ausführungsform kann die Isolierung ein elektrisch leitendes Verbindungselement umfassen, das in dem Ultraschallwerkzeug mit einem Isoliermaterial vergossen ist. So kann beispielsweise eine Verbindungsschraube in eine der Komponenten des Ultraschallwerkzeugs eingegossen sein.

Nach einer weiteren vorteilhaften Ausführungsform kann die Isolierung ein elektrisch leitendes Verbindungselement umfassen, das in dem Ultraschallwerkzeug mit einem Isoliermaterial verklebt ist. So ist es auch denkbar, eine Verbindungsschraube oder Verbindungsmutter mithilfe eines isolierenden Klebstoffs so zu verkleben, dass keine elektrisch leitende Verbindung vorhanden ist.

Nach einer weiteren vorteilhaften Ausführungsform kann das Verbindungselement selbst elektrisch leitende und elektrisch isolierende Komponenten umfassen, beispielsweise ein Gewinde aus elektrisch leitendem Material und einen Schraubenkopf aus isolierendem Material.

Das elektrisch isolierende Verbindungselement kann bezogen auf eine quer zu einer Längsachse eines Ultraschallwerkzeugs verlaufende Ebene symmetrisch ausgebildet sein, d. h. an seiner Vorderseite und an seiner Rückseite eine gleichartige Gestaltung aufweisen. Auch kann die Isolierung eine Isolierplatte, Isolierscheibe und/oder eine Isolierhülse aufweisen. Eine Isolierhülse kann beispielsweise auch über die Piezoeinheit in dem Konvertergehäuse gestülpt werden, sodass jeglicher elektrischer Kontakt zwischen den elektrischen Kontakten der Piezoeinheit und dem Konvertergehäuse bzw. mit diesen in Verbindung stehenden Komponenten ausgeschlossen ist.

Nach einer weiteren vorteilhaften Ausführungsform kann das Vergussmaterial die elektrischen Kontakte der Piezoeinheit ummanteln. So ist es beispielsweise möglich, die Piezoeinheit sowie die daran angeschlossenen elektrischen Leiter, soweit sie nicht isoliert sind, mit Isoliermaterial zu vergießen. Hierbei kann es vorteilhaft sein, wenn das Vergussmaterial in einen Ringraum zwischen der (üblicherweise zylindrischen) Piezoeinheit und dem Konvertergehäuse eingebracht ist. Hierbei ist es auch vorteilhaft, wenn das Vergussmaterial die Piezoeinheit entlang ihres gesamten Außenumfangs vollständig ummantelt.

Nach einer vorteilhaften Ausführungsform kann der Konverter einen Erdungsanschluss aufweisen und/oder es kann an die Sonotrode eine elektrische Signalleitung angeschlossen sein.

Mit dem vorstehend beschriebenen Ultraschallwerkzeug ist es möglich, an die Sonotrode eine elektrische Signalleitung anzuschließen, um eine Berührung zwischen Sonotrode und Amboss detektieren zu können. Wenn das Ultraschallwerkzeug in Verbindung mit einem Amboss eingesetzt wird, der aus elektrisch leitendem Material besteht, und an den eine Signalleitung angeschlossen ist, lässt sich auch bei geerdetem Konvertergehäuse ein Kontakt zwischen Sonotrode und Amboss elektrisch detektieren.

Auch kann das Ultraschallwerkzeug einen Amboss aus elektrisch leitendem Material aufweisen, an den eine Signalleitung angeschlossen ist.

Nachfolgend wird die vorliegende Erfindung rein beispielhaft anhand vorteilhafter Ausführungsformen und unter Bezugnahme auf die Zeichnungen beschrieben. Es zeigen:
- Fig. 1: eine teilweise geschnittene Seitenansicht eines Ultraschallwerkzeugs; und
- Fig. 2 bis Fig. 9: verschiedene Ausführungsformen einer elektrischen Isolierung zwischen Komponenten des Ultraschallwerkzeugs.

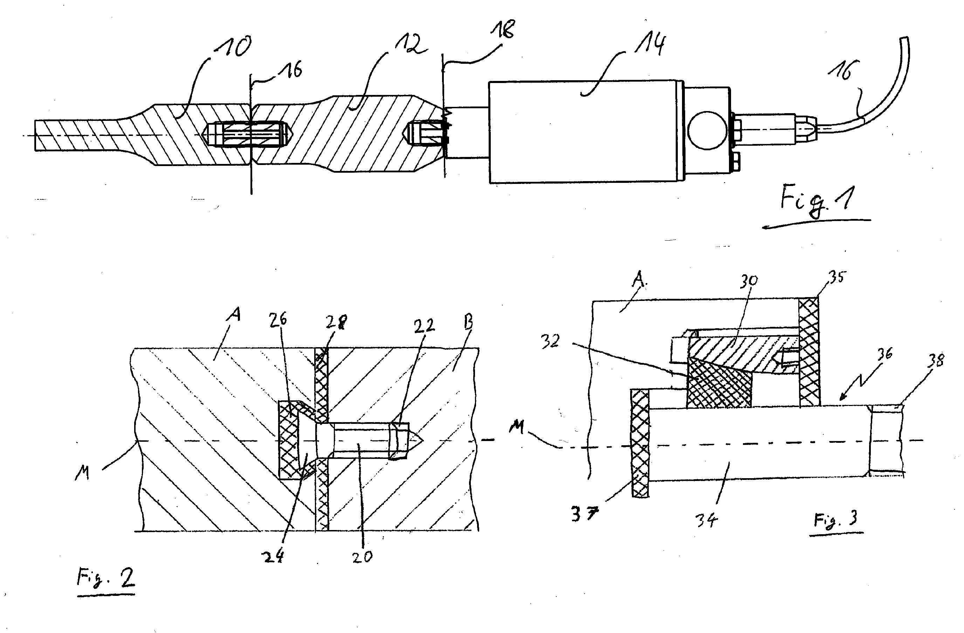

Fig. 1 zeigt eine rein beispielhafte Ausführungsform eines Ultraschallwerkzeugs mit einer Sonotrode 10 aus elektrisch leitendem Material, die über einen Amplitudenverstärker 12 mit einem Konverter 14 verschraubt ist, dessen Gehäuse ebenfalls aus elektrisch leitendem Material besteht und in dem eine (nicht dargestellte) Piezoeinheit vorgesehen ist, die über elektrische Kontakte ansteuerbar ist. Bei der Piezoeinheit handelt es sich um einen an sich bekannten elektromechanischen Wandler, der üblicherweise mehrere einzelne Piezoelemente umfasst, die über Kontaktschichten miteinander elektrisch verbunden sind. Zur Ansteuerung dient ein Kabel 16, das außerhalb des Konverters 14 isoliert ist, das jedoch im Inneren des Konvertergehäuses im Bereich des Anschlusses an die Piezoeinheit nicht vollständig isoliert ist. Insofern kann es beispielsweise bei einem Kabelbruch oder bei einem Abbrechen der elektrischen Kontaktschichten der Piezoeinheit dazu kommen, dass das Gehäuse des Konverters 14 Spannung führt. Aus diesem Grund ist das Konvertergehäuse geerdet. Um dennoch über die Sonotrode ein elektrisches Signal abgreifen zu können, ist eine elektrische Isolierung vorgesehen, was nachfolgend näher beschrieben wird.

Grundsätzlich kann die elektrische Isolierung an verschiedenen Stellen vorgesehen sein, beispielsweise an einer Grenzfläche zwischen der Sonotrode 10 und dem Konverter 14, sofern kein Amplitudenverstärker 12 verwendet wird. Auch kann die Isolierung an einer Grenzfläche 16 zwischen der Sonotrode und dem Amplitudenverstärker 12 vorgesehen sein. Auch ist es möglich, die Isolierung an einer Grenzfläche 18 zwischen dem Konverter 14 und dem Amplitudenverstärker 12 vorzusehen, der zwischen der Sonotrode 10 und dem Konverter 14 befestigt ist. Hierbei erfolgt bei dem in Fig. 1 dargestellten Ausführungsbeispiel die Verbindung zwischen Sonotrode 10, Amplitudenverstärker 12 und Konverter 14 durch Verschrauben.

Die Figuren 2 bis 9 zeigen jeweils Ausführungsformen einer Isolierung, die ein elektrisch isolierendes Verbindungselement umfasst. Hierbei kann die Verbindung durch Formschluss, Kraftschluss, Stoffschluss oder eine Kombination davon erfolgen.

Fig. 2 zeigt eine erste Ausführungsform einer Verbindung zwischen zwei Komponenten A und B des Ultraschallwerkzeugs, wobei es sich bei den Komponenten A und B um die Sonotrode 10, einen Amplitudenverstärker 12 oder den Konverter 14 handeln kann. Bei der in Fig. 2 dargestellten Ausführungsform sind die Komponenten A und B durch eine Schraube 20 verbunden, die in eine Gewindebohrung 22 der Komponente B eingeschraubt ist, die sich auf einer Mittelachse M der beiden Komponenten befindet. Ein Kopf 24 der Schraube 20 ist über ein isolierendes Vergussmaterial 26 in einen zentralen Hohlraum der Komponente A eingegossen. Zwischen den Komponenten A und B ist schließlich eine Isolierscheibe 28 vorgesehen.

Fig. 3 zeigt eine weitere Ausführungsform eines Verbindungselementes mit einer Isolierung, die Teil einer kraftschlüssigen Verbindung ist. Bei der in Fig. 3 dargestellten Ausführungsform ist in der Komponente A ein Spannring 30 vorgesehen, der in der Komponente A verschraubt werden kann, und der über eine Keilfläche ein isolierendes Spannfutter 32 gegen einen Schaft 34 eines Verbindungsbolzens 36 drückt, der sich entlang der Mittelachse M des Ultraschallwerkzeugs erstreckt. Der Verbindungsbolzen 36 kann über ein Gewinde 38 mit der Komponente B verschraubt werden. Alternativ kann der Verbindungsbolzen 36 auch einstückig mit der Komponente B ausgebildet sein. Zwischen beiden Komponenten A und B ist wiederum eine Isolierscheibe 35 vorgesehen. Ebenso befindet sich eine Isolierscheibe 37 zwischen dem Ende des Schaftes 34 und der Komponente A.

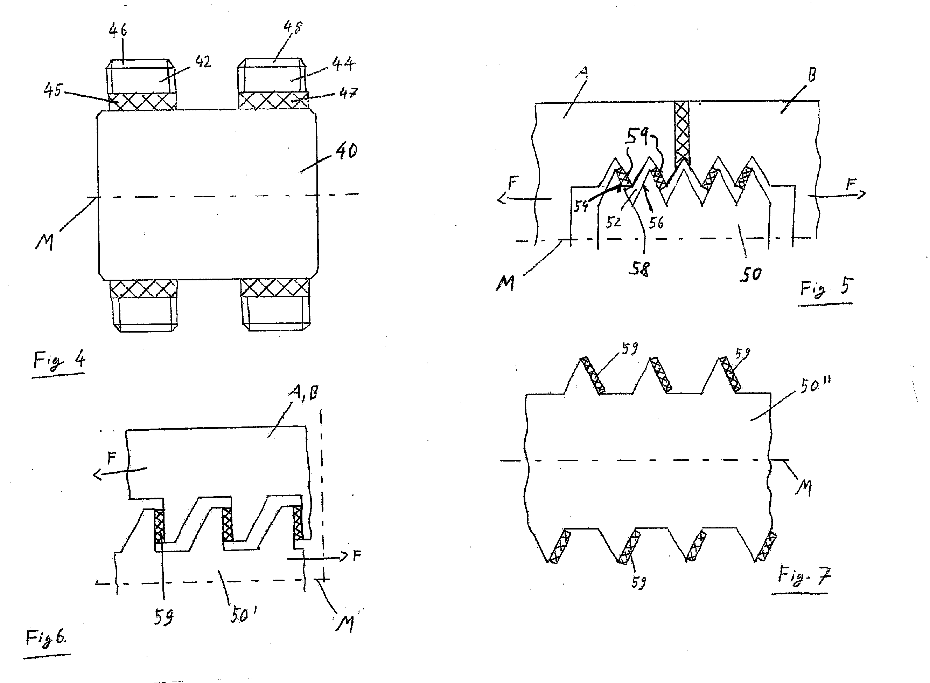

Fig. 4 zeigt eine weitere Ausführungsform einer Isolierung, die stoffschlüssig mit einem Teil des Ultraschallwerkzeugs verbunden ist. Bei der in Fig. 4 dargestellten Ausführungsform ist ein Verbindungsbolzen 40 vorgesehen, an dessen Außenumfang zwei voneinander beabstandete Buchsen 42 und 44 vorgesehen sind, die jeweils ein Außengewinde 46 und 48 aufweisen. Die Buchsen 42 und 44 sind mit isolierendem Klebstoff oder isolierendem Vergussmaterial 45 und 47 stoffschlüssig mit dem Bolzen 40 verbunden. Hierdurch können die Komponenten A und B mit dem Bolzen 40 isoliert verschraubt werden, wobei eine elektrisch leitende Verbindung zwischen den Stirnseiten beiden Komponenten A und B durch Zwischenlegen einer Isolierscheibe oder durch einen Luftspalt verhindert ist.

Fig. 5 und Fig. 6 zeigen jeweils verschiedenen Ausführungsformen einer Isolierung mit einer Schraubverbindung, die ein Gewinde aufweist, bei dem nur eine von zwei an einem Gewindetal 58 angrenzenden Gewindeflanken 54, 56 beschichtet ist. So zeigt Fig. 5 zwei miteinander verbundene Komponenten A und B, wobei die Verbindung über einen Gewindebolzen 50 erfolgt, der mit beiden Komponenten A und B verschraubt ist. Wie zu erkennen ist, weist das Gewinde 52 des Gewindebolzens 50 jeweils eine druckbelastete Flanke 54 und eine sich daran angrenzende ein Spiel aufweisende Flanke 56 auf, wobei beide Flanken 54 und 56 an das Gewindetal 58 angrenzen. Hierbei ist jedoch nur die Gewindeflanke 54 mit Isoliermaterial beschichtet, d. h. bei Verbindung der Komponenten A und B durch Verschrauben wirken Kräfte in den beiden Richtungen F, wobei auf die Beschichtungen 59 der Gewindeflanken 54 nur eine Druckkraft, jedoch keine Zugkraft aufgebracht wird.

Fig. 6 zeigt eine weitere Ausführungsform einer Isolierung mit einem Gewinde. Hierbei sind die Komponenten A und/oder B mit einem Sägegewinde versehen, um eine Verbindung zwischen den Komponenten mithilfe eines Bolzens 50' herzustellen. Auch hier ist eine Beschichtung nur an einer sich senkrecht zur Mittelachse M erstreckenden Gewindeflanke vorgesehen, nicht jedoch an der an das zugehörige Gewindetal angrenzenden schräg verlaufenden Gewindeflanke.

Fig. 7 zeigt eine weitere Ausführungsform eines Verbindungsbolzens 50" zur Verbindung zweier Komponenten A und B. Bei dieser Ausführungsform ist der Gewindegang eines Gewindebolzens 50" unterbrochen, sodass jeweils nur ein umlaufender Gewindegang vorgesehen ist, der zu dem benachbarten Gewindegang beabstandet ist. Das Gewinde des Bolzens 50" ist somit vielfach unterbrochen, wobei optional jeweils nur eine Gewindeflanke jedes Gewindegangs mit einer Beschichtung 59 versehen ist.

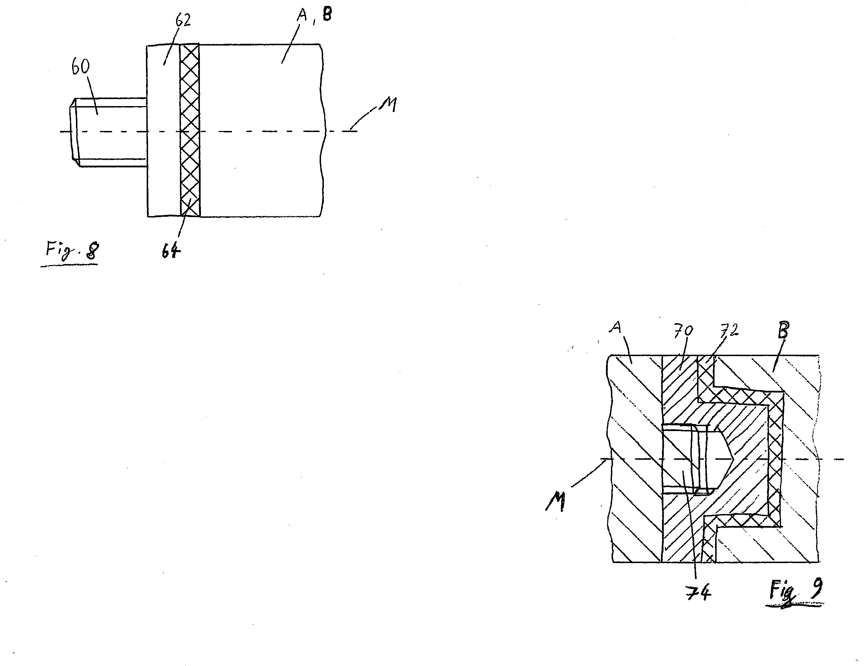

Fig. 8 zeigt eine weitere Ausführungsform einer elektrischen Isolierung, bei der die elektrische Isolierung ein elektrisch leitendes Verbindungselement in Form einer Schraube 60 umfasst, die mit ihrem Schraubenkopf 62 mit der Komponente A und/oder B insbesondere vollflächig über ein Isoliermaterial 64 verklebt ist. Die Dicke der Klebeschicht 64 ist geeignet zu wählen. So kann die Klebeschicht 64 beispielsweise etwa 0,5 mm dick sein und sich beispielsweise im Bereich eines Schwingungsknotens des Ultraschallwerkzeugs befinden.

Schließlich zeigt Fig. 9 eine Ausführungsform einer Isolierung zwischen den beiden Komponenten A und B, wobei die Isolierung ein elektrisch leitendes Verbindungselement in Form einer Mutter 70 umfasst, die in einer der Komponenten mit Isoliermaterial 72 vergossen ist. Hierbei erstreckt sich die isolierende Vergussmasse 72 bzw. der isolierende Klebstoff 72 über die gesamte Querschnittsfläche der Komponenten A bzw. B, sodass eine elektrische Isolierung sichergestellt ist. Die Komponente A kann dann mit einem angeformten Schraubzapfen 74 in der Mutter 70 der Komponente B verschraubt werden.

## Patentansprüche

1. Ultraschallwerkzeug, umfassend eine Sonotrode (10) aus elektrisch leitendem Material und einen mit diesem verbundenen Konverter (14), in dem eine über elektrische Kontakte ansteuerbare Piezoeinheit vorgesehen ist,
**dadurch gekennzeichnet,**
**dass** zwischen der Sonotrode (10) und den elektrischen Kontakten der Piezoeinheit eine elektrische Isolierung vorgesehen ist.

2. Ultraschallwerkzeug nach Anspruch 1,
**dadurch gekennzeichnet,**
**dass** die Isolierung an einer Grenzfläche zwischen der Sonotrode (10) und dem Konverter (14) vorgesehen ist.

3. Ultraschallwerkzeug nach Anspruch 1 oder 2,
**dadurch gekennzeichnet,**
**dass** die Isolierung an einer Grenzfläche (16) zwischen der Sonotrode (10) und einem Amplitudenverstärker (12) vorgesehen ist, der zwischen der Sonotrode (10) und dem Konverter (14) befestigt ist.

4. Ultraschallwerkzeug nach einem der vorstehenden Ansprüche,
**dadurch gekennzeichnet,**
**dass** die Isolierung an einer Grenzfläche (18) zwischen dem Konverter (14) und einem Amplitudenverstärker (12) vorgesehen ist, der zwischen der Sonotrode (10) und dem Konverter (14) befestigt ist.

5. Ultraschallwerkzeug nach einem der vorstehenden Ansprüche,
**dadurch gekennzeichnet,**
**dass** die Isolierung ein elektrisch isolierendes Verbindungselement und/oder ein Vergussmaterial umfasst, beispielsweise ein Elastomer.

6. Ultraschallwerkzeug nach Anspruch 5,
**dadurch gekennzeichnet,**
**dass** das Vergussmaterial die elektrischen Kontakte oder die Piezoeinheit ummantelt, und/oder dass das Vergussmaterial in einen Ringraum zwischen der Piezoeinheit und einem Gehäuse des Konverters (14) eingebracht ist.

7. Ultraschallwerkzeug nach Anspruch 5 oder 6,
**dadurch gekennzeichnet,**
**dass** das Verbindungselement aus elektrisch isolierendem Material besteht, beispielsweise aus Kunststoff, Keramik oder aus Glas.

8. Ultraschallwerkzeug nach Anspruch 5, 6 oder 7,
**dadurch gekennzeichnet,**
**dass** das Verbindungselement zumindest teilweise mit einer elektrisch isolierenden Beschichtung (59) versehen ist.

9. Ultraschallwerkzeug nach einem der vorstehenden Ansprüche 5 - 8,
**dadurch gekennzeichnet,**
**dass** das Verbindungselement eine Schraubverbindung (20, 22, 40, 50, 50', 50", 60, 70) umfasst.

10. Ultraschallwerkzeug nach einem der vorstehenden Ansprüche 5 - 9,
**dadurch gekennzeichnet,**
**dass** die Isolierung Teil einer kraftschlüssigen Verbindung ist, die insbesondere ein Klemmelement (30, 32) umfasst.

11. Ultraschallwerkzeug nach einem der vorstehenden Ansprüche 5 - 10,
**dadurch gekennzeichnet,**
**dass** die Isolierung (45, 47) stoffschlüssig mit einem Teil (40) des Ultraschallwerkzeugs verbunden ist.

12. Ultraschallwerkzeug nach Anspruch 9, 10 oder 11,
**dadurch gekennzeichnet,**
**dass** die Schraubverbindung (50) ein Gewinde (58) aufweist, bei dem nur eine von zwei an ein Gewindetal (58) angrenzenden Gewindeflanken (54, 56) beschichtet ist.

13. Ultraschallwerkzeug nach einem der vorstehenden Ansprüche 9 - 12,
**dadurch gekennzeichnet,**
**dass** die Schraubverbindung (50") ein Gewinde aufweist, dessen Gewindegang unterbrochen ist.

14. Ultraschallwerkzeug nach einem der vorstehenden Ansprüche,
**dadurch gekennzeichnet,**
**dass** die Isolierung ein elektrisch leitendes Verbindungselement (20, 60, 70) umfasst, das in dem Ultraschallwerkzeug mit einem Isoliermaterial (26, 72) vergossen ist, oder das das in dem Ultraschallwerkzeug mit einem Isoliermaterial (64) verklebt ist.

15. Ultraschallwerkzeug nach einem der vorstehenden Ansprüche 5 - 14,
**dadurch gekennzeichnet,**
**dass** Verbindungselement elektrisch leitende und elektrisch isolierende Komponenten umfasst.
